# EUROPEAN PATENT SPECIFICATION

(11) **EP 4 187 105 B1**
(45) Date of publication and mention of the grant of the patent: **01.07.2026**
(21) Application number: 22209507.7
(22) Date of filing: 24.11.2022
(51) Int. Cl.: F04D 29/56, F04D 19/00, F03D 9/32

(54) **VEHICLE COMPRISING A TURBO DEVICE**
FAHRZEUG MIT EINER TURBOVORRICHTUNG
VÉHICULE COMPRENANT UN DISPOSITIF TURBO

(30) Priority: 25.11.2021 NL 2029901
(43) Date of publication of application: 31.05.2023
(73) Proprietor: Engyn Holding B.V., 9712 BT Groningen (NL)
(72) Inventor: De Haan, Ivana, 9712BT Groningen (NL)
(74) Representative: Laddé, Jurre Gerard

(56) References cited:
- DE-C- 959 126
- FR-A- 841 711
- FR-A1- 2 613 682
- US-A1- 2017 082 092
- US-A1- 2018 015 967

## Description

### FIELD OF THE INVENTION

This disclosure relates to a vehicle comprising a turbo device provided in a duct of the vehicle, wherein the turbo device comprises an impeller and pumps air through the duct in a first state and is driven by the air flow through the duct in a second state. This disclosure in particular relates to such vehicle wherein adjustable guide vanes are provided near the impeller. This disclosure further relates to a turbo system comprising an impeller and adjustable guide vanes, to a computer-implemented method for controlling the adjustable guide vanes, and to associated computer program, computer-readable storage medium and controller.

### BACKGROUND

US patent application 20110100731 discloses a vehicle comprising a wind turbine system. In this publication, a passenger car is described wherein a duct is provided that extends from the front end to the rear of the car. As the car drives along, wind flows into the duct at the front and drives an impeller provided in the duct. This impeller is coupled to a dynamo which generates electrical energy.

FR2613682A1 discloses a device capable of moving the volume of air in front of the vehicles, of channeling it, and of rejecting it at the rear. It consists of a faring 1 composed of a battery of fans 2 and of a venturi 3 as well as deflecting flaps 4 contributing to seizing this volume of air, passing it through a sheath 5 in order to return it at the rear. The device according is more particularly intended for utility vehicles and touring coaches for example.

US2017082092A1 discloses air channels and wind turbines systems for cooling vehicle parts and storing electrical energy in a vehicle battery. The vehicle may have a battery, a braking system, an air duct with wind turbines and a generator. The air duct has an inlet portion for receiving an airflow, a body portion having wind turbines, and an outlet portion for directing the airflow to the braking system. A generator converts kinetic energy of the wind turbines to electrical energy stored in the battery. The wind turbines can be positioned in an air duct extending from a front bumper to an area proximal to one or more wheels to enhance vehicle aerodynamics. Alternatively, the wind turbines can be positioned in openings between grill shutters to generate energy and cool a radiator. Alternatively, the wind turbines can be positioned proximal to powertrain or drivetrain components for cooling and generating electrical energy.

US2018015967A1 discloses a vehicle or trailer assembly comprising at least one fan positioned on an exterior of the vehicle or trailer, wherein the at least one fan redirects or accelerates air moving over, around, or through the exterior of the vehicle or trailer. Also disclosed is a fan assembly comprising a manifold configured to be positioned on an outside surface of a vehicle, along an axis transverse to a direction of travel of the vehicle. The fan assembly also includes a plurality of motorized fans rotatably mounted along the axis of the manifold, such that the motorized fans are configured to accelerate air passing along the outside surface or within an exterior of the vehicle, in the direction of travel of the vehicle.

There is a continuous striving in art for reducing vehicle's energy consumption.

### SUMMARY

Therefore a vehicle with bodywork, such as a passenger car or truck, according to claim 1 is disclosed.

A turbo device may be understood as a device in which energy can be exchanged between the flow of air and an impeller system which performs a rotational movement. Energy can be exchanged in both directions: from airflow to the impeller system, or vice versa.

Generating electrical energy this way is only practically possible at relatively high speeds of the vehicle. At low speeds, the airstream does not produce sufficient pressure in the duct to drive the impeller and thus generate electrical energy.

When a vehicle is driving along, air flows around the bodywork. This airflow **relative** to the bodywork causes lower pressure behind the bodywork of the vehicle than at the front of the body work. This pressure differential works against the vehicle and increases the vehicle's energy consumption.

By providing the turbo device in the duct of the vehicle, on one hand, the airflow can be converted by the turbo device into electrical energy, but at lower drive speeds the turbo device can also be used as a pump, with which air can be pumped from the front to the rear of the bodywork, so that the pressure differential between the front and rear is reduced, thereby reducing the vehicle's energy consumption as well. Hence, the turbo device enables to improve the vehicle's energy consumption irrespective of whether the vehicle is driving fast or slowly. Recovering energy from the air flow may be more effective at relatively high speeds, whereas actively reducing the pressure differential may be more effective at medium speeds.

Preferably, the impeller is positioned perpendicularly to the direction of air flow through the duct. The duct may be shaped, at least at the position of the impeller and first guide vanes, as a cylinder having a circular base. In such case, preferably, the axis around which the impeller rotates coincides with the central longitudinal axis of that cylinder.

The turbo device comprises an impeller provided on an axis, and a motor-generator coupled to the impeller to, in the first state, power the impeller and to, in the second state, be driven by the impeller.

A motor-generator can function both as an electric motor to power the impeller, as well as a generator when being driven by the impeller. Depending on the speed of the vehicle, the motor-generator can then be used, for example, to pump air and reduce the pressure differential around the body, or alternatively the motor-generator can be used to generate energy from the air flowing through duct.

At the air inlet side, near the impeller, preferably adjacent to the impeller, first adjustable guide vanes are provided.

As referred to herein, adjustable guide vanes may be understood as guide vanes the position and/or orientation of which can be adjusted, for example relative to one or more side walls of the duct. Preferably, the guide vanes referred to herein are fixed in the sense that they cannot make a full rotation around the axis, in contrast to the vanes of the impeller. As such, depending on their positions and/or orientations, the guide vanes can control the extent to which the air flow hits the impeller vanes or passes by them.

The guide vanes may be understood to be positioned near the impeller in the sense that they can guide the airflow onto the vanes of the impeller for driving the impeller, which would for example be desired in the second state. In any case, by adjusting the first guide vanes, airflow through the impeller can be optimized for either the first state, wherein air is pumped through the duct, or the second state, where air drives the impeller to generate energy. The air inlet side of the impeller may be understood as a side of the impeller facing the air inlet.

Further, second adjustable guide vanes are provided at the air outlet side of the impeller, near the impeller, preferably adjacent to the impeller. The second adjustable guide allow for even better optimization of the air flow for the first or second state. The distance between the second guide vanes and the impeller may be approximately equal to the distance between the first guide vanes and the impeller.

The air outlet side of the impeller may be understood as a side of the impeller facing the air outlet.

In an embodiment, each of the first adjustable guide vanes is tiltable around a tilt axis extending radially from the axis. This makes it easy to adjust the guide vanes while air is flowing through the duct. Preferably, each of the second adjustable guide vanes, if present, is also tiltable around a tilt axis extending radially from the axis so that the second guide vanes can also be easily adjusted.

In an embodiment of the vehicle, a first adjusting ring is provided around the first adjustable guide vanes, wherein the first adjusting ring is rotatable around the axis and engages via a mechanism the first guide vanes, so that upon rotating the first adjusting ring, the first guide vanes are adjusted.

If the above described second guide vanes are present, then, in an embodiment, a second adjusting ring is provided around the second adjustable guide vanes, wherein the second adjusting ring is rotatable around the axis and engages via a mechanism the second guide vanes, so that upon rotating the second adjusting ring, the second guide vanes are adjusted.

The first and second adjusting ring allow for easy adjustment of the first and second adjustable guide vanes by turning either of the two adjusting rings. The adjusting rings can be provided on the outside of the duct. The adjusting rings can be adjusted manually, but adjustment can easily be automated via an actuator and be made dependent on the vehicle's road speed and environmental factors, in particular wind speed and wind direction, so that an optimum position for the guide vanes is achieved.

If both the first and second adjusting ring are present, then these rings may be movable independently from each other. This would allow the orientation and/or position of the first guide vanes and second guide vanes to be separably controllable.

In an embodiment of the vehicle, the first guide vanes make an angle with the impeller vanes smaller than 40 degrees, seen radially, in the first state of the turbo device, and the first guide vanes make an angle with the impeller vanes of between 45 degrees and 90 degrees, preferably between 70 and 90 degrees, seen radially, in the second state of the turbo device.

If the above described second guide vanes are present, then the second guide vanes may make an angle with the impeller vanes smaller than 40 degrees, seen radially, in the first state of the turbo device, and the second guide vanes may make an angle with the impeller vanes of between 45 degrees and 90 degrees, seen radially, in the second state of the turbo device.

The first guide vanes and, if present, the second guide vanes preferably run parallel to vanes of the impeller, seen radially, in the first state of the turbo device, which may be understood as that the guide vanes make an angle with the impeller vanes smaller than 25 degrees, preferably as that the guide vanes make an angle with the impeller vanes smaller than 15 degrees.

As a side note, the ranges disclosed herein include the end points.

All vanes of the impeller may run parallel to each other, as viewed radially to the axis. All first guide vanes may run parallel to each other, as viewed radially to the axis. All second guide vanes, if present, may run parallel to each other, as viewed radially to the axis. The first and second guide vanes may all run parallel to each other, as viewed radially to the axis, however, this is not required. The first and second guide vanes may be oriented differently.

One aspect of this disclosure relates to a turbo system according to claim 5.. The vehicle comprises an air inlet provided at the front of the bodywork, an air outlet provided at the rear of the bodywork, and a duct connecting the air inlet to the air outlet. The turbo system comprises a turbo device configured to be provided in the duct and to, when provided in the duct pump air from the air inlet through the duct to the air outlet in a first state and letting drive the turbo device by air flowing via the air inlet through the duct to the air outlet in a second state. The turbo device comprises an impeller provided on an axis. Further, the turbo system comprises on one side of the impeller first adjustable guide vanes provided near the impeller, preferably adjacent to the impeller. Optionally, the turbo system comprises on another side of the impeller second adjustable guide vanes provided near the impeller, preferably adjacent to the impeller.

The turbo system can be advantageously installed in a vehicle as a unit.

The turbo device of the turbo system may be any of the turbo devices described herein. For example, the turbo device may comprise the motor-generator referred to herein.

One aspect of this disclosure relates to a computer-implemented method according to claim 6.

This computer-implemented method enables that the turbo device automatically adopts the state that is most beneficial in terms of reducing the energy consumption of the vehicle. The parameters (i) speed of the vehicle, (ii) wind speed and (iii) orientation of the vehicle, in particular the duct, relative to the direction of the wind allow to accurately determine whether the first is appropriate or the second. To illustrate, the faster the vehicle is driving over the road, the more effective the second state will be (in terms of reducing the energy consumption of the vehicle) and the less effective the first state will be. Further, the slower the vehicle is driving over the road, the less effective the second state will be (in terms of reducing the energy consumption of the vehicle) and the more effective the first state will be. Further, the higher the wind speed, the more effective the second state will be and the less effective the first state will be. Also, the lower the wind speed, the less effective the second state will be and the more effective the first state will be. Likewise, the more the vehicle, in particular the duct, is aligned with the direction of the wind, the more effective the second state will be and the less effective the first state will be. Also, the less the vehicle, in particular the duct, is aligned with the direction of the wind, the less effective the second state will be and the more effective the first state will be.

Based on these parameters, the first or second state can be determined. It may for example be that a vehicle is driving very slow (or is even standing still), yet that it is well aligned with the direction of the wind so that the wind flows well through the duct, and that the wind speed is quite high. In such case, it may be more effective in terms of reducing the energy consumption by the vehicle to have the turbo device in the second state.

How these parameters should weighed in the determination of the appropriate state depends for example also on the shape of the vehicle. Suitable calibration experiments may be performed and/or simulated per vehicle type in order to determine, for that vehicle type, for different combinations of values for the parameters, whether the first or second state is more effective.

The speed of the vehicle as may be indicated by the signal may for example be measured by speedometer installed in the vehicle. Further, the wind speed, which may be understood as the speed of the wind relative to the road, may be measured using one or more Pitot tubes, for example, or may be obtained from a remote weather monitoring system and/or may be determined based on weather forecasts. The direction of the wind relative to the road may be obtained similarly as how the wind speed may be obtained.

In an embodiment, the computer-implemented method comprises causing the turbo device to adopt the determined first state or second state comprises causing the motor-generator to power the impeller or, respectively, be driven by the impeller.

In an embodiment, the computer-implemented method comprises determining the first state or the second state for the turbo device comprises performing a comparison of the speed as indicated by the signal, with a threshold speed, and determining, based on the comparison, the first state or the second state for the turbo device.

This embodiment is very easy to implement as it only requires to measure the speed of the vehicle. Since the speed of the vehicle is an important parameter for determining whether the first or second state is more effective, still this embodiment can achieve good results. The threshold speed may be prestored.

In an embodiment, determining the first state or the second state for the turbo device comprises
- determining that the speed as indicated by the signal is lower than the threshold speed and, based on this determination, determining the first state for the turbo device, or
- determining that the speed as indicated by the signal is higher than the threshold speed and, based on this determination, determining the second state for the turbo device.

Again, this embodiment is very easily implemented and can still significantly reduce the energy consumption of the vehicle.

In an embodiment, the computer-implemented method comprises determining, based on the speed and/or wind speed and/or orientation of the vehicle relative to the direction of the wind, respectively, as indicated by the signal, respective positions and/or orientations of the first guide vanes, and causing the first guide vanes to adopt the determined positions and/or orientations.

It should be appreciated that a certain first position and/or orientation for the first guide vanes may be stored in association with the first state and that a certain second position and/or orientation for the first guide vanes may be stored in association with the second state. In such case, with the determination of the first or second state, also the certain first position and/or orientation or, respectively, the certain second position and/or orientation is determined.

The certain first position and/or orientation of the first guide vanes may be that the first guide vanes make an angle with the impeller vanes smaller than 40 degrees, seen radially, preferably that the first guide vanes run parallel to vanes of the impeller, seen radially.

The certain second position and/or orientation of the first guide vanes may be that the first guide vanes make an angle with the impeller vanes of between 45 degrees and 90 degrees, preferably between 70 and 90 degrees, seen radially.

Preferably, the computer-implemented method also comprises determining, based on the speed and/or wind speed and/or orientation of the vehicle relative to the direction of the wind, respectively, as indicated by the signal, respective positions and/or orientations of the second guide vanes, and causing the second guide vanes to adopt the determined positions and/or orientations.

It should be appreciated that a certain first position and/or orientation for the second guide vanes may be stored in association with the first state and that a certain second position and/or orientation for the second guide vanes may be stored in association with the second state. In such case, with the determination of the first or second state, also the certain first position and/or orientation or, respectively, the certain second position and/or orientation is determined.

The certain first position and/or orientation of the second guide vanes may be that the second guide vanes make an angle with the impeller vanes smaller than 40 degrees, seen radially, preferably that the second guide vanes run parallel to vanes of the impeller, seen radially.

The certain second position and/or orientation of the second guide vanes may be that the second guide vanes make an angle with the impeller vanes of between 45 degrees and 90 degrees, preferably between 70 and 90 degrees, seen radially.

In an embodiment, the computer-implemented method comprises determining respective positions and/or orientations of the first (or second) guide vanes, and causing the first (or second) guide vanes to adopt the determined positions and/or orientations. In such embodiment, the respective positions and/or orientations of the first (or second) guide vanes determining may be determined based on a comparison of the speed as indicated by the signal with a threshold speed.

The above embodiment may comprise
- determining that the speed as indicated by the signal is higher than the threshold speed and, based on this determination, determining the desired positions and/or orientations of the first (or second) guide vanes to be such that the first (or second) guide vanes make an angle with the impeller vanes smaller than 40 degrees, seen radially, preferably that the first guide vanes run parallel to vanes of the impeller, seen radially, or
- determining that the speed as indicated by the signal is lower than the threshold speed and, based on this determination, determining the desired positions and/or orientation of the first (or second) guide vanes to be such that the second guide vanes and the vanes of the impeller, seen
radially to the axis, make an angle of between 45 degrees and 90 degrees, preferably between 70 and 90 degrees.

One aspect of this disclosure relates to a controller according to claim 11.

One aspect of this disclosure relates to a computer program according to claim 12.

One aspect of this disclosure relates to a computer-readable data according to claim 13.

The computer-readable data carrier may be hard disk, for example, or a signal.

One aspect of this disclosure relates to a computer readable storage medium having computer readable program code embodied therewith, and a processor, preferably a microprocessor, coupled to the computer readable storage medium, wherein responsive to executing the computer readable program code, the processor is configured to perform any of the computer-implemented methods described herein.

One aspect of this disclosure relates to a computer program or suite of computer programs comprising at least one software code portion or a computer program product storing at least one software code portion, the software code portion, when run on a computer system, being configured for executing any of the computer-implemented methods described herein.

One aspect of this disclosure relates to a non-transitory computer-readable storage medium storing at least one software code portion, the software code portion, when executed or processed by a computer, is configured to perform any of the computer-implemented methods described herein.

One aspect of this disclosure relates to a data carrier signal carrying any of the computer programs described herein.

Elements and aspects discussed for or in relation with a particular embodiment may be suitably combined with elements and aspects of other embodiments, unless explicitly stated otherwise. Embodiments of the present invention will be further illustrated with reference to the attached drawings, which schematically will show embodiments according to the invention. It will be understood that the present invention is not in any way restricted to these specific embodiments.

### BRIEF DESCRIPTION OF THE DRAWINGS

These and other features of the invention are explained further in the attached drawings.
Figure 1 shows a schematic representation of a vehicle configured as per the invention.
Figure 2A shows a detail of the turbo device set to generate energy.
Figure 2B shows the turbo device set as per Figure 2A.
Figure 3A shows a detail of the turbo device set to pump air.
Figure 3B shows the turbo device set as per Figure 3A.
Figure 4A separately shows a guide vanes element and adjusting ring.
Figure 4B shows the guide vanes element and adjusting ring of figure 4A in assembled state.
Figure 5 separately shows an element having the first guide vanes, the impeller coupled to the motor generator, and an element having the second guide vanes.
Figure 6 shows part of a turbo device according to an embodiment in the first state.
Figure 7 shows part of a turbo device according to an embodiment in the second state.
Figure 8A shows part of a turbo device according to an embodiment in the first state.
Figure 8B shows part of a turbo device according to an embodiment in the second state.
Figure 9A shows details of the guide vanes and impeller vanes according to an embodiment in the first state.
Figure 9B shows details of the guide vanes and impeller vanes according to an embodiment in the second state.
Figure 10 is a top view of the turbo device according to an embodiment.
Figure 11 is a section (partially) of the turbo device of figure 10.
Figure 12 is a flow chart illustrating a computer implemented method according to an embodiment.
Figure 13 is a flow chart illustrating a computer implemented method according to an embodiment.
Figure 14 is a time chart illustrating communication between different components according to an embodiment.
Figure 15 is a controller according to an embodiment.

### DETAILED DESCRIPTION OF THE DRAWINGS

In the figures, identical reference numbers indicate identical or similar elements.

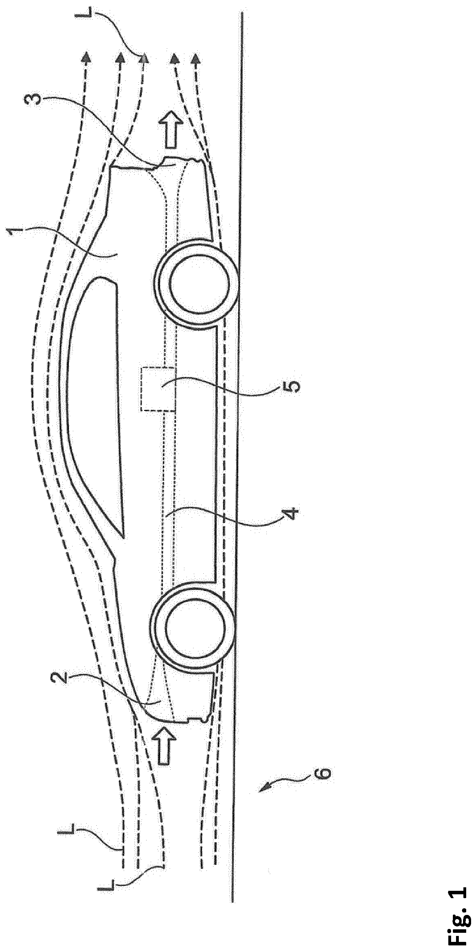

Figure 1 shows a vehicle (1) according to an embodiment, in particular a car 1. An air inlet 2 is provided at the front of the car 1 and an air outlet 3 is provided at the rear of the car 1. A duct 4 is provided between the air inlet 2 and air outlet 3, in which a turbo device 5 is provided.

When the car 1 drives over a road surface 6, air L will flow along the bodywork of the car 1 and some of the air L will flow into the duct via the air inlet 2.

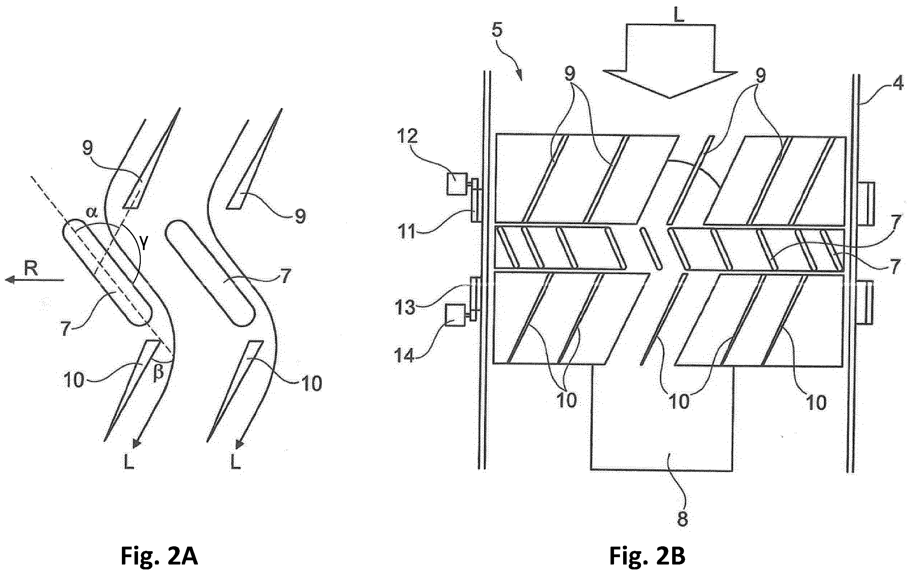

In figures 2A and 2B the turbo device 5 is shown in the energy generation state, also referred to herein as the second state. The turbo device 5 has a wheel with vanes 7 which is coupled to a motor-generator 8. The motor-generator 8 is for example a dynamotor known in the art. At the side of air inlet 2, a first array of adjustable guide vanes 9 is provided and at the side of the air outlet 3 a second array of adjustable guide vanes 10 is provided. It should be appreciated, however, that the second array of adjustable guide vanes is optional.

The second guide vanes 9 can rotate and are brought into the desired position using an adjusting ring 11, coupled to the second guide vanes via a mechanism. The adjusting ring 11 is provided on the outside of the duct 4 and can be rotated around it by an actuator 12.

In a similar manner, the second guide vanes 10 can be adjusted using the adjusting ring 13 and an actuator 14.

As shown in figure 2A, the first guide vanes 9 are at angle α with the vanes 7 and the second guide vanes 10 make an angle β with the vanes 7. These two angles, α and β, are between 45 degrees and 135 degrees. It should be appreciated that if angle α is between 90 and 135 degrees, then angle γ is between 45 and 90 degrees. Thus, if angle α is between 90 and 135 degrees, the first guide vanes 9 can still be said to make an angle with the impeller vanes 7 of between 45 and 90 degrees. Similar considerations apply to the angle between the second guide vanes 10 and impeller vanes 7. The turbo device 5 is therefore set in an energy generating state, so that air L flowing through the duct will drive the impeller 7 and so power the motor-generator 8, which will in turn generate electricity.

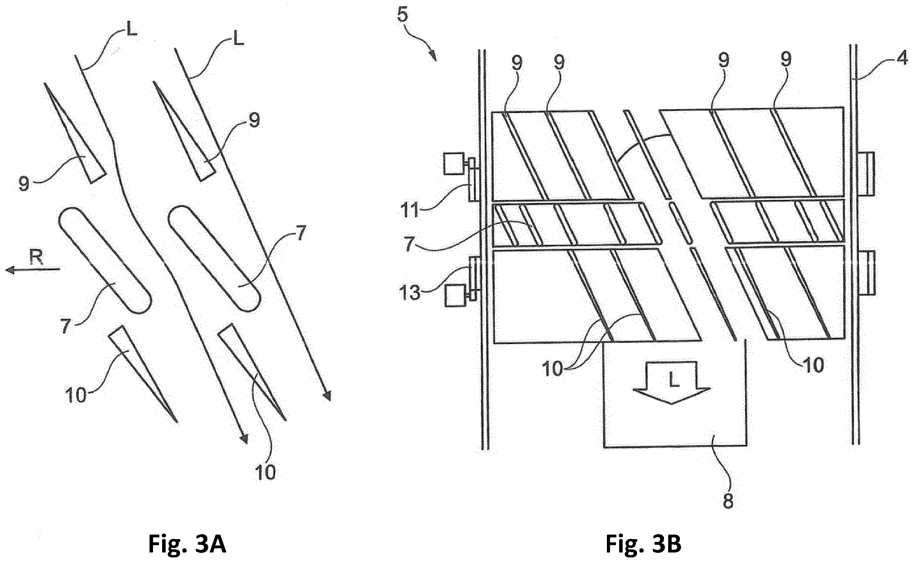

In figures 3A and 3B the turbo device is shown in a pump state, also referred to herein as the first state. In this case, the first guide vanes 9 and the second guide vanes 10 are set parallel to the vanes 7 of the wheel by rotation of adjusting rings 11 and 13.

If the motor-generator 8 is now provided a current, this will rotate the vanes 7 in the direction R and air L will be drawn in through the air inlet 2 and along the duct 4, an be pumped to the air outlet 3, in order to reduce a pressure differential between the front and rear of the bodywork of the vehicle (1) body.

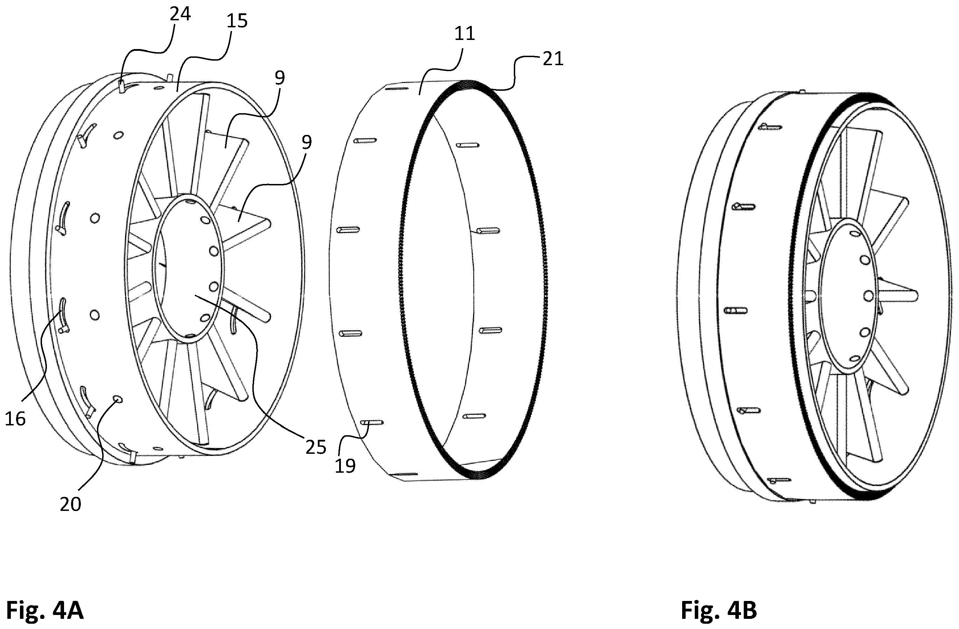

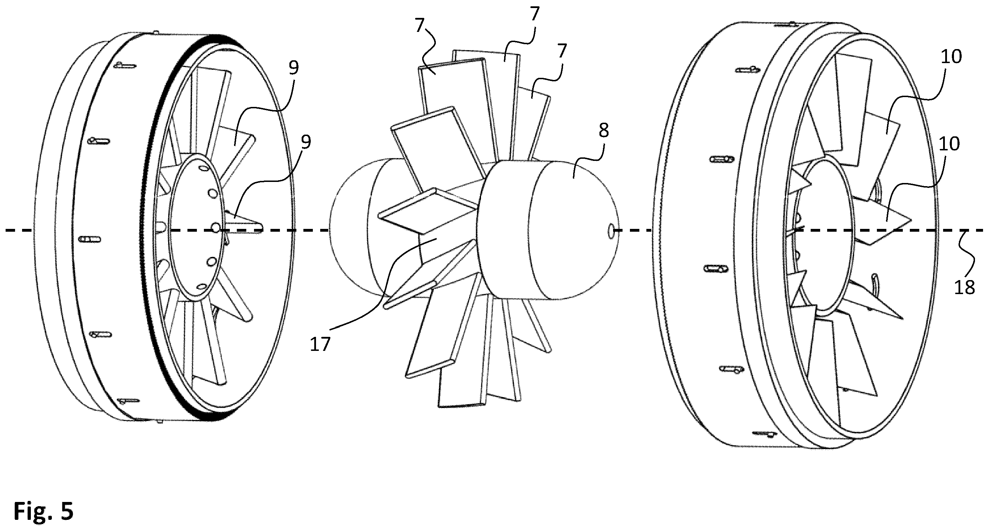

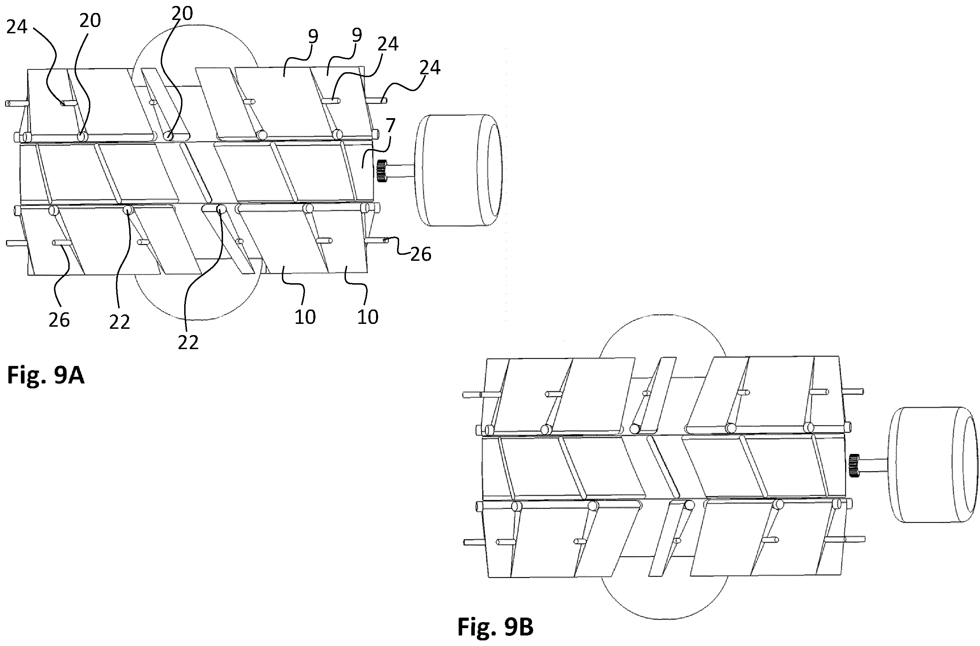

Figure 4A shows that the first guide vanes 9 may be positioned between an inner housing 25 and outer housing 15. The outer housing 15 may form part of the wall of the duct. Each guide vane 9 in this embodiment, is connected to both the inner housing 25 and outer housing 15 by means of its tilt axis 20, which may be embodied as a small shaft, more clearly visible in figures 9A and 9B. Each axis extends radially from the central axis 18 (shown in figure 5) and each guide vane 9 can rotate around its axis 20.

Further, the outer housing 15 comprises a number of curved slits 16. Protrusions 24, e.g. pins, connected to the guide vanes 9, extend through the slits 16.

Figure 4A also shows adjusting ring 11. The adjusting ring 11 comprises slits 19 and an indented surface 21 that meshes with a sprocket wheel 30 of an actuator 12, which may embodied as a stepper motor.

Figure 4B shows the elements of figure 4A in assembled state. The protrusions 24 engage the adjusting ring 11 in that the protrusions 24 extend through slits 19.

Second guide vanes may be provided similarly.

Figure 5 shows main components of the turbo device in disassembled state. Herein, the motor-generator 8 is clearly visible coupled to the impeller 17 having impeller vanes 7. The first guide vanes 9 are provided on one side of the impeller 17 and the second guide vanes 10 are provided on another side of the impeller 17. The impeller 17 is configured to rotate around axis 18.

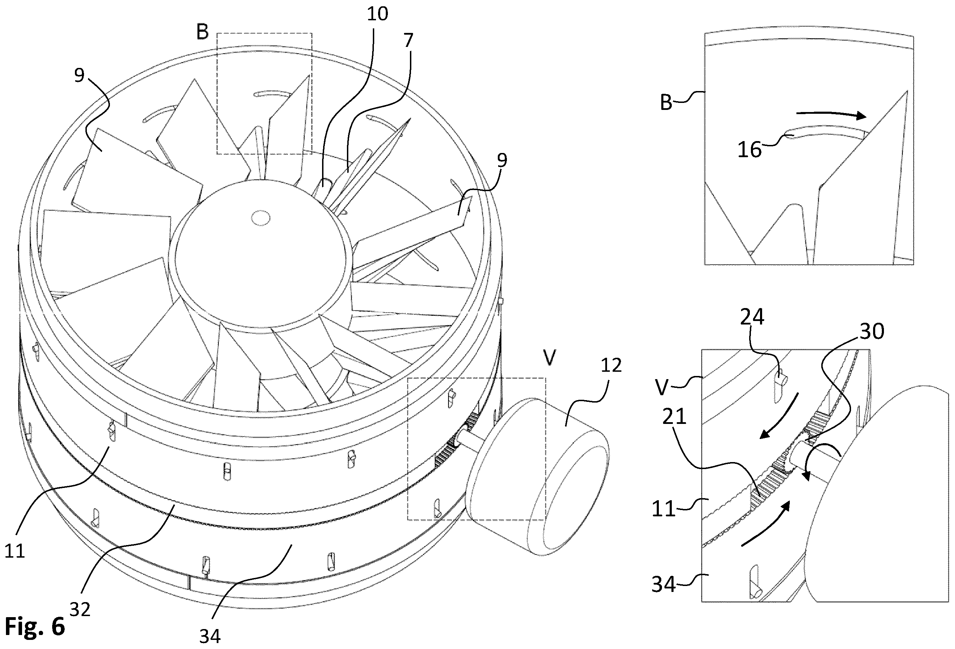

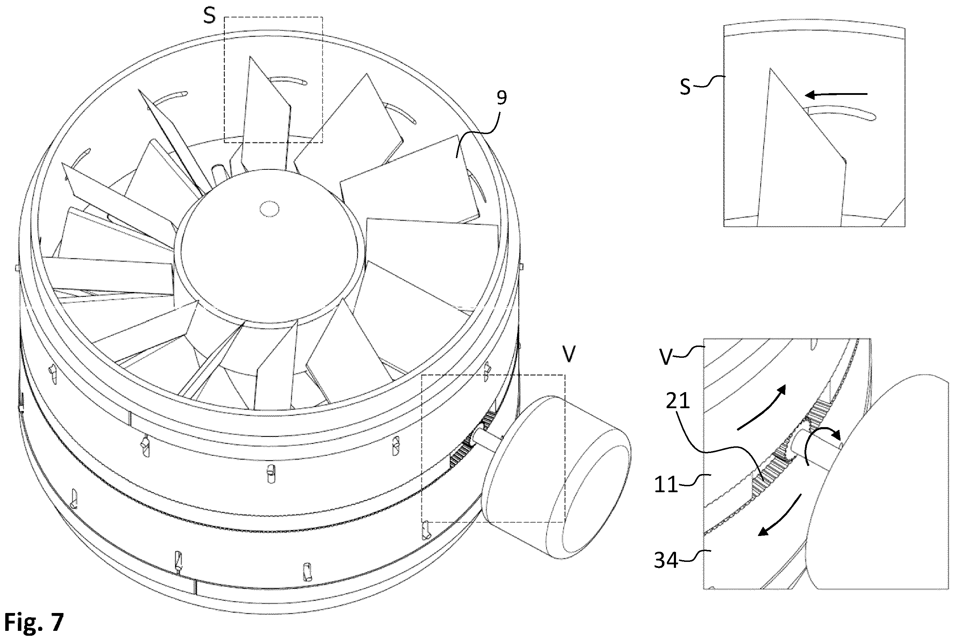

Figures 6 and 7 each shows the components of figure 5 in assembled state. A distance spacer 32 is provided between the first adjusting ring 11 and second adjusting ring 34 of the second guide vanes 10. Further, actuator 12 is provided that engages with the indented surface 21 of both the first adjusting ring 11 and of the second adjusting ring 34.

Figure 6 shows the turbo device in the first state. The first 9 and second 10 guide vanes run, seen radially, parallel to the impeller vanes 7. In order to achieve this state, the sprocket wheel 30 of the actuator 12 has rotated in the direction of the arrow shown in outset V, which has caused the adjusting ring 11 to rotate clockwise as seen from a top view (see the arrow on adjusting ring 11 in outset V) and the adjusting ring 34 to rotate counterclockwise as seen from a top view (see the arrow on adjusting ring 34 in outset V). The rotating adjusting ring 11 pushed the pins 24 to the left (as viewed from the outside of the turbo device) sliding them through guiding slits 16 (see arrow in outset B). Likewise, the rotating adjusting ring 34 has pushed the pins of the second guide vanes 10 to the right as viewed from the outside (not shown). Herewith, the first and second guide vanes have been brought into a position and/or orientation such that they run parallel with the impeller vanes 7, viewed radially.

Thus, in this embodiment, a single actuator 12 is used to control the positions and/or orientations of both the first guide vanes and the second guide vanes. However, separate actuators may also be used, which would enable separate control of the first and second guide vanes.

Figure 7 shows the turbo device in the second state. To this end, the sprocket wheel 30 has rotated as shown in outset V herewith rotating the first adjusting ring 11 counter clockwise as viewed from a top view, and the second adjusting ring 34 clockwise as viewed from a top view. As a result, the pins 24 of the first guide vanes have been moved to the right through the slits 16 as viewed from the outside of the turbo device (see arrow in outset S). Herewith, the first and second guide vanes have been brought into a position and/or orientation such that they make an angle with the impeller vanes 7, viewed radially, of between 45 degrees and 90 degrees.

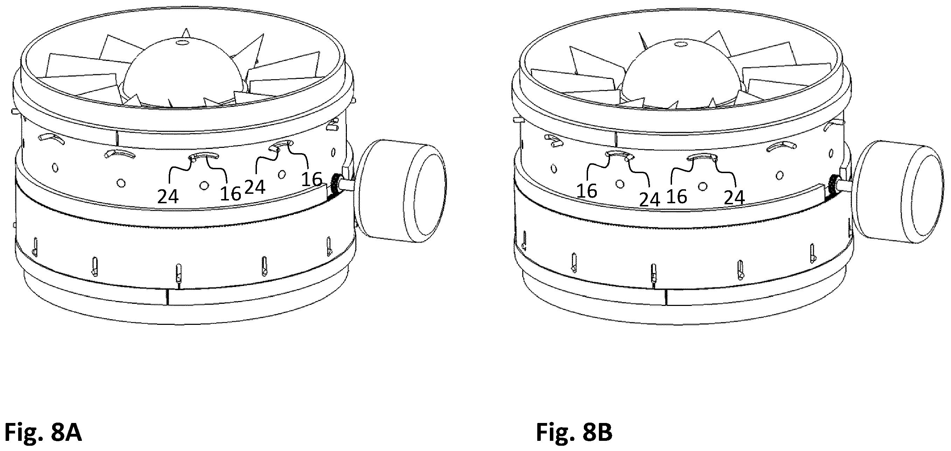

Figures 8A and 8B show the turbo device with the first adjusting ring 11 taken off for clarity in the first state and, respectively, the second state. Note that the positions of the pins 24 relative to the slits 16 differs between figure 8A and 8B.

Figures 9A and 9B show the first guide vanes 9, the impeller vanes 7 and the second guide vanes 10 in the first state and, respectively, the second state.

These figures clearly show that by moving pins 24 left and right (through the slits 16) the guide vanes 9 rotate around their radially extending axes 20. Likewise, by moving pins 26 left and right, the guide vanes 10 rotate around their radially extending axes 22.

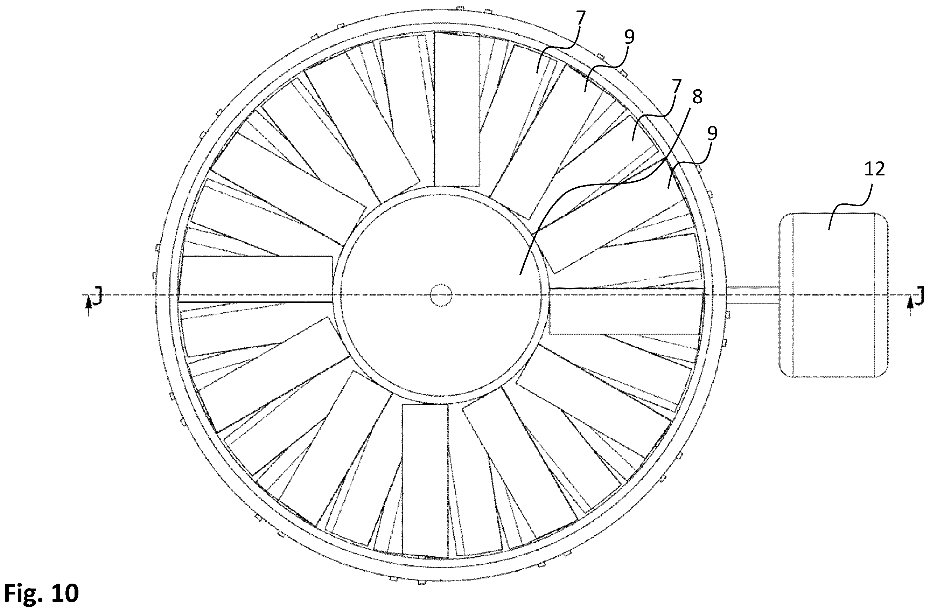

Figure 10 shows a top view of the turbo device.

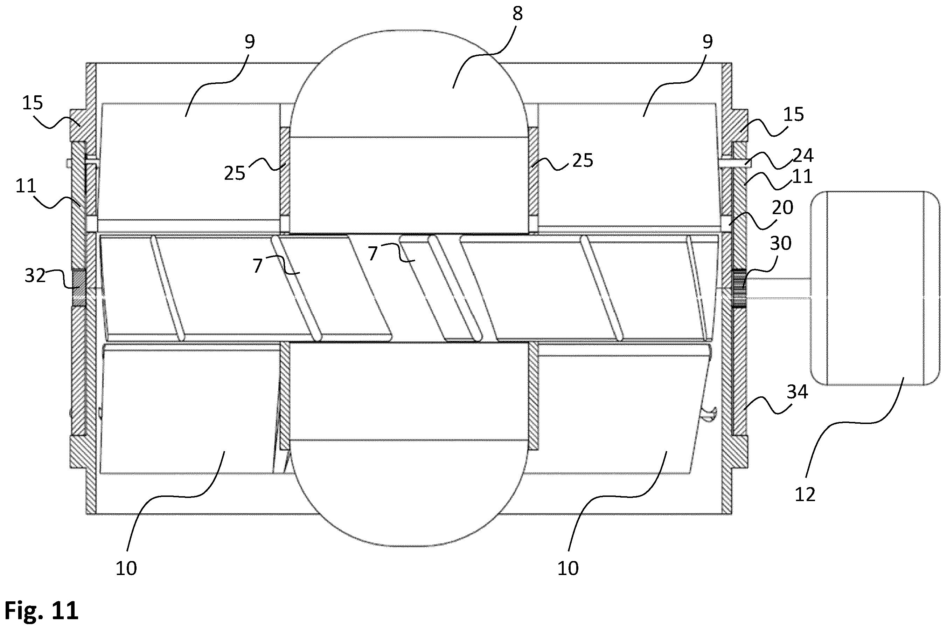

Figure 11 shows a cross section of the inner housing 25, outer housing 15, first adjusting ring 11, second adjusting ring 34, spacer 32. For clarity, the impeller vanes 7 are shown (no cross section is taken from the impeller vanes 7).

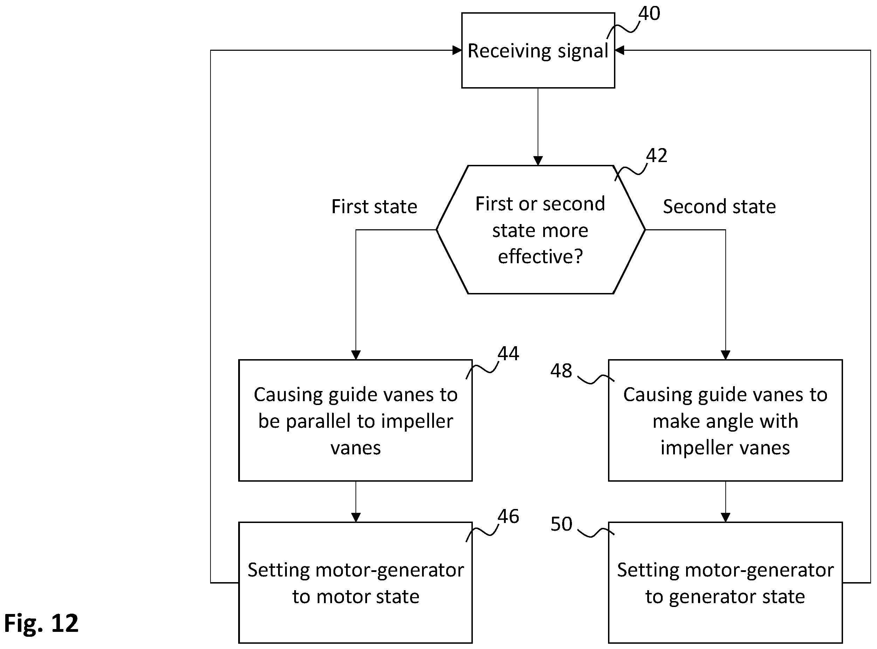

Figure 12 is a flow chart illustrating a computer implemented method according to an embodiment. Step 40 comprises receiving a signal indicative of a speed of the vehicle (1) and/or indicative of a wind speed and/or indicative of an orientation of the vehicle (1) relative to a direction of the wind. Then, in step 42, it is determined, based on the speed and/or wind speed and/or orientation of the vehicle (1) relative to the direction of the wind, respectively, as indicated by the signal, whether the first state or second state is more effective. If the first state is determined more effective, then steps 44 and 46 are performed. If the second state is determined more effective, then steps 48 and 50 are performed.

Step 44 comprises causing the guide vanes to be parallel to the impeller vanes, for example by controlling an actuator described herein.

Step 46 comprises causing the turbo device to adopt the determined first state.

Step 48 comprises causing the guide vanes to make an angle with the impeller vanes for example of between 45 degrees and 90 degrees, for example by controlling an actuator described herein.

Step 50 comprises causing the turbo device to adopt the determined second state.

The method is repeated as indicated by the arrows leading back to step 40. If one of the parameters changes, then it may be that another state than the current state becomes more effective.

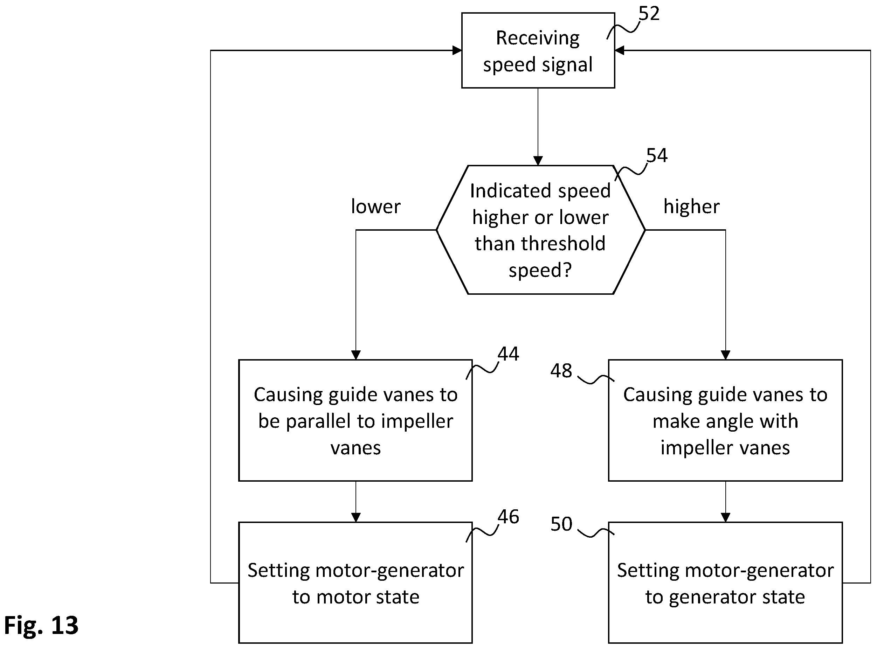

Figure 13 is a flow chart illustrating a computer implemented method according to an embodiment. Steps 44 - 50 have been described with reference to figure 12. However, in this embodiment, specifically a speed signal is received, e.g. from a speedometer of the vehicle (1), indicative of a speed of the vehicle (1). Then, in step 54, this speed is compared to a threshold speed. If the indicated speed is lower than the threshold speed, then steps 44 and 46 are performed. If the indicated speed is higher than the threshold speed, then steps 48 and 50 are performed.

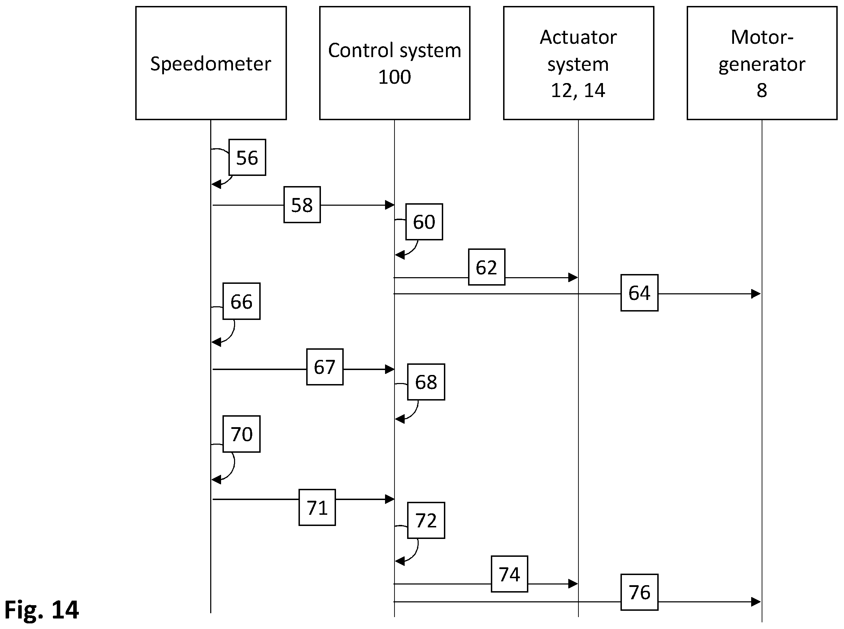

Figure 14 illustrates how and when different components of the vehicle (1) may communicate with each other according to an embodiment. The speedometer repeatedly measures (steps 56, 66 and 70) the speed of the vehicle (1) and sends the measured speed values, in signals 56, 66 and 70 to a control system 100. Based on the signals received from the speedometer, the control system determines, in steps 60, 68 and 72, which state is more effective in terms of reducing the energy consumption of the vehicle (1). If the state of the turbo device and, consequently, the positions and/or orientations of guide vanes should change, then the control system sends instruction signals to this end to an actuator system (see signals 62 and 74) and sends instruction signals to the motor-generator 8 (see signals 64 and 76). In step 68, for example, the controller 100 determines that the current state of the turbo device, in particular of the motor-generator 8 of the turbo device is the most effective state. Therefore step 68 does not trigger any instruction signals to the actuator system or motor-generator 8.

It should be appreciated that any type of measurement device may also provide information, such as wind speed or wind direction, to the control system 100.

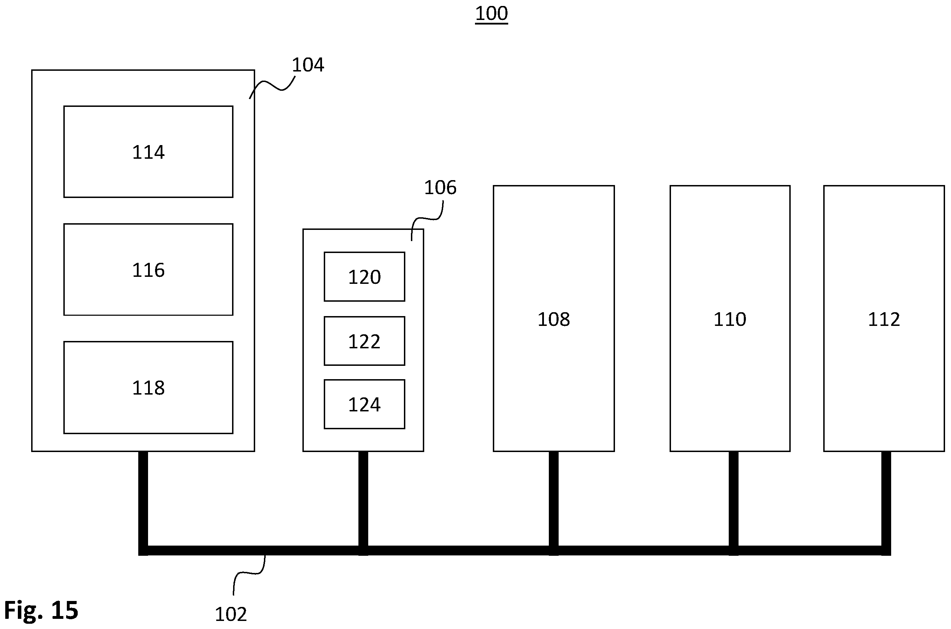

Figure 15 schematically illustrates a data processing 100, also referred to as a computer, according to an embodiment. The data processing system 100 may for example represent a controller as described herein.

In data processing system 100, a system bus 102 connects the different components of the data processing system 100. In particular, the system bus 102 depicted in figure xx connects the Central Processing Unit (CPU) 104, memory elements 106, input devices 108, output devices 110 and communication devices 112 with each other so that they can exchange information. The system bus 102 may be understood to serve both as data bus, address bus and control bus known in the art.

The CPU 104 is configured to perform steps as per the instructions comprised in a computer program. To illustrate, based on such instructions, the CPU may perform any of the computer-implemented methods described herein. Typically, the CPU 104 is embodied as a microprocessor, which can be implemented on a single metal-oxide-semiconductor integrated circuit chip. The CPU 104 comprises a control unit 114, an arithmetic logical unit (ALU) 116 and a plurality of registers 118.

The control unit 114 is configured to retrieve instructions from a main memory 120. Typically, the control unit 114 comprises a binary decoder to convert the retrieved instructions into timing and control signals that direct the operation of for example the ALU 116. ALU 116 is configured to perform logical operations, such as additions, subtraction, multiplication, division and Boolean operations, that are required for carrying out the instructions. The registers 118 are small memory elements that can be read and written at relatively high speed. A register may for example store an instruction, a storage address, or any other kind of data. In addition, the CPU may contain hardware caches known in the art (not shown). Preferably the CPU has different levels of caches. These hardware caches may be understood as an intermediate state between the faster registers 119 and the slower main memory 120.

Memory elements 106 comprise a main memory 120. The main memory 120, also referred to as primary storage in the art, has stored data that is directly accessible to the CPU 104. The CPU 104 may continuously read instructions, i.e. read computer programs, stored in the main memory 120 and execute these instructions. The main memory 120 is typically a random access memory (RAM).

Memory elements 106 further comprise so-called secondary storage 122, which may be embodied as one or more hard disk drives and/or as one or more solid state drives. Typically, these secondary storage is non-volatile. Further, the memory elements may comprise other storage devices 124, such as removable storage devices, e.g. CD, DVD, USB flash drives, floppy disks, et cetera.

Input devices 108 may be understood as devices that are used to provide information to the computer 100, in particular to the CPU 104. Non-limiting examples of input devices are a keyboard, a microphone, a joystick, a mouse, a touch sensitive screen, a speedometer referred to herein, a wind speed meter referred to herein, et cetera. Output devices 110 may be understood as devices that output information out of the computer. Non-limiting examples of output devices 110 are a display, a printer, a headphones, loudspeaker, a motor-generator referred to herein, any of the actuators referred to herein, et cetera.

Communication devices 112 may be understood as devices that allow the computer system to communicate with other computers, such as with a server computer, client computer, or any other type of remote device. Non-limiting examples of communication devices 112 include modems, cable modems, ethernet cards, Bluetooth modules, et cetera.

## Claims

1. Vehicle (1) having a bodywork, such as a passenger car or truck, the vehicle (1) comprising:
an air inlet (2) provided at the front of the bodywork, and
an air outlet (3) provided at the rear of the bodywork, and
a duct (4) connecting the air inlet (2) to the air outlet (3), and
a turbo device (5) provided in the duct (4) for, in a first state, pumping air from the air inlet (2) through the duct (4) to the air outlet (3), and for, in a second state, letting drive the turbo device (5) by air flowing via the air inlet (2) through the duct (4) to the air outlet (3), wherein the turbo device (5) comprises
- an impeller (17) provided on an axis, and
- a motor-generator (8) coupled to the impeller (17) to, in the first state, power the impeller (17) and to, in the second state, be driven by the impeller (17), wherein
at the air inlet (2) side of the impeller (17), near the impeller (17), preferably adjacent to the impeller (17), first adjustable guide vanes (9) are provided, wherein
at the air outlet (3) side of the impeller (17), near the impeller (17), preferably adjacent to the impeller (17), second adjustable guide vanes (10) are provided.

2. Vehicle (1) according to claim 1, wherein each of the first adjustable guide vanes (9) is tiltable around a tilt axis extending radially from the axis.

3. Vehicle (1) according to any of the preceding claims, wherein
a first adjusting ring (11) is provided around the first adjustable guide vanes (9), wherein
the first adjusting ring (11) is rotatable around the axis and engages via a mechanism the first guide vanes (9), so that upon rotating the first adjusting ring (11), the first guide vanes (9) are adjusted.

4. Vehicle (1) according to any of the preceding claims, wherein
the impeller (17) comprises impeller vanes (7), and
the first guide vanes (9) make an angle with the impeller vanes (7) smaller than 40 degrees, seen radially, in the first state of the turbo device (5), and wherein
the first guide vanes (9) make an angle with the impeller vanes (7) of between 45 degrees and 90 degrees, preferably between 70 and 90 degrees, seen radially, in the second state of the turbo device (5).

5. A turbo system for use in a vehicle (1) having a bodywork, wherein
the vehicle (1) comprises an air inlet (2) provided at the front of the bodywork, an air outlet (3) provided at the rear of the bodywork, and a duct (4) connecting the air inlet (2) to the air outlet (3), wherein the turbo system comprises
a turbo device (5) configured to be provided in the duct (4) and to, when provided in the duct (4) pump air from the air inlet (2) through the duct (4) to the air outlet (3) in a first state and letting drive the turbo device (5) by air flowing via the air inlet (2) through the duct (4) to the air outlet (3) in a second state, wherein the turbo device (5) comprises
- an impeller (17) provided on an axis, and
- a motor-generator (8) coupled to the impeller (17) to, in the first state, power the impeller (17) and to, in the second state, be driven by the impeller (17), and wherein the turbo system further comprises
- on one side of the impeller (17) first adjustable guide vanes (9) provided near the impeller (17), preferably adjacent to the impeller (17) , and on another side of the impeller (17) second adjustable guide vanes (10) provided near the impeller (17), preferably adjacent to the impeller (17).

6. A computer-implemented method for controlling the turbo device (5) in the vehicle (1) referred to in claim 1, the computer-implemented method comprising
- receiving a signal indicative of a speed of the vehicle (1) and/or indicative of a wind speed and/or indicative of an orientation of the vehicle (1) relative to a direction of the wind, and
- based on the speed and/or wind speed and/or orientation of the vehicle (1) relative to the direction of the wind, respectively, as indicated by the signal, determining the first state or the second state for the turbo device (5), and
- causing the turbo device (5) to adopt the determined first state or second state.

7. The computer-implemented method according to claim 6, wherein causing the turbo device (5) to adopt the determined first state or second state comprises causing the motor-generator (8) to power the impeller (17) or, respectively, be driven by the impeller (17).

8. The computer-implemented method according to claim 6 or 7, wherein determining the first state or the second state for the turbo device (5) comprises
- performing a comparison of the speed as indicated by the signal, with a threshold speed, and
- based on the comparison, determining the first state or the second state for the turbo device (5).

9. The computer-implemented method according to claim 8, wherein determining the first state or the second state for the turbo device (5) comprises
- determining that the speed as indicated by the signal is lower than the threshold speed and, based on this determination, determining the first state for the turbo device (5), or
- determining that the speed as indicated by the signal is higher than the threshold speed and, based on this determination, determining the second state for the turbo device (5).

10. The computer-implemented method according to any of the claims 6-9, further comprising
- based on the speed and/or wind speed and/or orientation of the vehicle (1) relative to the direction of the wind, respectively, as indicated by the signal, determining respective positions and/or orientations of the first guide vanes (9), and
- causing the first guide vanes (9) to adopt the determined positions and/or orientations.

11. A controller for controlling the turbo device (5) referred to in claim 1, the controller comprising a processor configured to perform the method according to any of the claims 6-10.

12. A computer program comprising instructions which, when the program is executed by the controller according to claim 11, cause the controller to carry out the method according to any of the preceding claims 6-10.

13. A computer-readable data carrier having stored thereon the computer program of the preceding claim 12.

## Patentansprüche

1. Fahrzeug (1) mit einer Karosserie, wie ein Personenkraftwagen oder Lastkraftwagen, wobei das Fahrzeug (1) Folgendes umfasst:
einen Lufteinlass (2), der an der Vorderseite der Karosserie bereitgestellt ist, und
einen Luftauslass (3), der an der Rückseite der Karosserie bereitgestellt ist, und
einen Kanal (4), der den Lufteinlass (2) mit dem Luftauslass (3) verbindet, und
eine Turbovorrichtung (5), die in dem Kanal (4) bereitgestellt ist, um in einem ersten Zustand Luft von dem Lufteinlass (2) durch den Kanal (4) zu dem Luftauslass (3) zu pumpen und um in einem zweiten Zustand die Turbovorrichtung (5) durch Luft, die über den Lufteinlass (2) durch den Kanal (4) zu dem Luftauslass (3) strömt, antreiben zu lassen, wobei die Turbovorrichtung (5) Folgendes umfasst:
- ein Laufrad (17), das an einer Achse bereitgestellt ist, und
- einen Motor-Generator (8), der an das Laufrad (17) gekoppelt ist, um in dem ersten Zustand das Laufrad (17) mit Leistung zu versorgen und in dem zweiten Zustand durch das Laufrad (17) angetrieben zu werden, wobei
an der Seite des Lufteinlasses (2) des Laufrads (17), in der Nähe des Laufrads (17), vorzugsweise benachbart zu dem Laufrad (17), erste einstellbare Leitschaufeln (9) bereitgestellt sind, wobei an der Seite des Luftauslasses (3) des Laufrads (17), in der Nähe des Laufrads (17), vorzugsweise benachbart zu dem Laufrad (17), zweite einstellbare Leitschaufeln (10) bereitgestellt sind.

2. Fahrzeug (1) gemäß Anspruch 1, wobei jede der ersten einstellbaren Leitschaufeln (9) um eine Neigungsachse neigbar ist, die sich radial von der Achse erstreckt.

3. Fahrzeug (1) gemäß einem der vorhergehenden Ansprüche, wobei ein erster Einstellring (11) um die ersten einstellbaren Leitschaufeln (9) bereitgestellt ist, wobei der erste Einstellring (11) um die Achse drehbar ist und über einen Mechanismus mit den ersten Leitschaufeln (9) in Eingriff steht, sodass beim Drehen des ersten Einstellrings (11) die ersten Leitschaufeln (9) eingestellt werden.

4. Fahrzeug (1) gemäß einem der vorhergehenden Ansprüche, wobei
das Laufrad (17) Laufradschaufeln (7) umfasst und
die ersten Leitschaufeln (9) mit den Laufradschaufeln (7) in dem ersten Zustand der Turbovorrichtung (5) radial gesehen einen Winkel von weniger als 40 Grad bilden und wobei die ersten Leitschaufeln (9) in dem zweiten Zustand der Turbovorrichtung (5) mit den Laufradschaufeln (7) radial gesehen einen Winkel zwischen 45 Grad und 90 Grad, vorzugsweise zwischen 70 und 90 Grad, bilden.

5. Turbosystem zur Verwendung in einem Fahrzeug (1) mit einer Karosserie, wobei das Fahrzeug (1) einen Lufteinlass (2), der an der Vorderseite der Karosserie bereitgestellt ist, einen Luftauslass (3), der an der Rückseite der Karosserie bereitgestellt ist, und einen Kanal (4) umfasst, der den Lufteinlass (2) mit dem Luftauslass (3) verbindet, wobei das Turbosystem Folgendes umfasst:
eine Turbovorrichtung (5), die dazu konfiguriert ist, in dem Kanal (4) bereitgestellt zu werden, und, wenn sie in dem Kanal (4) bereitgestellt ist, in einem ersten Zustand Luft von dem Lufteinlass (2) durch den Kanal (4) zu dem Luftauslass (3) zu pumpen und die Turbovorrichtung (5) durch Luft, die über den Lufteinlass (2) durch den Kanal (4) zu dem Luftauslass (3) strömt, in einem zweiten Zustand antreiben zu lassen, wobei die Turbovorrichtung (5) Folgendes umfasst:
- ein Laufrad (17), das an einer Achse bereitgestellt ist, und
- einen Motor-Generator (8), der an das Laufrad (17) gekoppelt ist, um in dem ersten Zustand das Laufrad (17) mit Leistung zu versorgen und in dem zweiten Zustand durch das Laufrad (17) angetrieben zu werden, und wobei das Turbosystem ferner Folgendes umfasst:
- auf einer Seite des Laufrads (17) erste einstellbare Leitschaufeln (9), die in der Nähe des Laufrads (17), vorzugsweise benachbart zu dem Laufrad (17), bereitgestellt sind, und auf einer anderen Seite des Laufrads (17) zweite einstellbare Leitschaufeln (10), die in der Nähe des Laufrads (17), vorzugsweise benachbart zu dem Laufrad (17), bereitgestellt sind.

6. Computerimplementiertes Verfahren zum Steuern der Turbovorrichtung (5) in dem Fahrzeug (1) genannt in Anspruch 1, wobei das computerimplementierte Verfahren Folgendes umfasst:
- Empfangen eines Signals, das eine Geschwindigkeit des Fahrzeugs (1) angibt und/oder eine Windgeschwindigkeit angibt und/oder eine Ausrichtung des Fahrzeugs (1) bezogen auf eine Windrichtung angibt, und
- Bestimmen des ersten Zustands oder des zweiten Zustands für die Turbovorrichtung (5) auf Grundlage der Geschwindigkeit und/oder Windgeschwindigkeit und/oder Ausrichtung des Fahrzeugs (1) jeweils bezogen auf die Windrichtung, wie durch das Signal angezeigt, und
- Bewirken, dass die Turbovorrichtung (5) den bestimmten ersten Zustand oder zweiten Zustand annimmt.

7. Computerimplementiertes Verfahren gemäß Anspruch 6, wobei das Bewirken, dass die Turbovorrichtung (5) den bestimmten ersten Zustand oder zweiten Zustand annimmt, Bewirken, dass der Motor-Generator (8) das Laufrad (17) mit Leistung versorgt bzw. durch das Laufrad (17) angetrieben wird, umfasst.

8. Computerimplementiertes Verfahren gemäß Anspruch 6 oder 7, wobei das Bestimmen des ersten Zustands oder des zweiten Zustands für die Turbovorrichtung (5) Folgendes umfasst:
- Durchführen eines Vergleichs der Geschwindigkeit, wie sie durch das Signal angezeigt wird, mit einer Schwellengeschwindigkeit und
- Bestimmen des ersten Zustands oder des zweiten Zustands für die Turbovorrichtung (5) auf Grundlage des Vergleichs.

9. Computerimplementiertes Verfahren gemäß Anspruch 8, wobei das Bestimmen des ersten Zustands oder des zweiten Zustands für die Turbovorrichtung (5) Folgendes umfasst:
- Bestimmen, dass die Geschwindigkeit, wie durch das Signal angezeigt, niedriger als die Schwellengeschwindigkeit ist, und, auf Grundlage dieser Bestimmung, Bestimmen des ersten Zustands für die Turbovorrichtung (5) oder
- Bestimmen, dass die Geschwindigkeit, wie durch das Signal angezeigt, höher als die Schwellengeschwindigkeit ist, und, auf Grundlage dieser Bestimmung, Bestimmen des zweiten Zustands für die Turbovorrichtung (5).

10. Computerimplementiertes Verfahren gemäß einem der Ansprüche 6-9, ferner umfassend
- Bestimmen der jeweiligen Positionen und/oder Ausrichtungen der ersten Leitschaufeln (9) auf Grundlage der Geschwindigkeit und/oder Windgeschwindigkeit und/oder Ausrichtung des Fahrzeugs (1) jeweils bezogen auf die Windrichtung, wie durch das Signal angezeigt, und
- Bewirken, dass die ersten Leitschaufeln (9) die bestimmten Positionen und/oder Ausrichtungen annehmen.

11. Steuervorrichtung zum Steuern der Turbovorrichtung (5) genannt in Anspruch 1, wobei die Steuervorrichtung einen Prozessor umfasst, der dazu konfiguriert ist, das Verfahren gemäß einem der Ansprüche 6-10 durchzuführen.

12. Computerprogramm, umfassend Anweisungen, die, wenn das Programm durch die Steuervorrichtung gemäß Anspruch 11 ausgeführt wird, bewirken, dass die Steuervorrichtung das Verfahren gemäß einem der vorhergehenden Ansprüche 6-10 vornimmt.

13. Computerlesbarer Datenträger, auf dem das Computerprogramm nach dem vorhergehenden Anspruch 12 gespeichert ist.

## Revendications

1. Véhicule (1) possédant une carrosserie, tel qu'une voiture particulière ou un camion, le véhicule (1) comprenant :
une entrée d'air (2) disposée à l'avant de la carrosserie, et
une sortie d'air (3) disposée à l'arrière de la carrosserie, et
un conduit (4) reliant l'entrée d'air (2) à la sortie d'air (3), et
un dispositif turbo (5) disposé dans le conduit (4) pour, dans un premier état, pomper de l'air depuis l'entrée d'air (2) à travers le conduit (4) vers la sortie d'air (3), et pour, dans un second état, permettre l'entraînement du dispositif turbo (5) par l'air s'écoulant via l'entrée d'air (2) à travers le conduit (4) vers la sortie d'air (3), dans lequel le dispositif turbo (5) comprend
- une roue à aubes (17) disposée sur un axe, et
- un moteur-générateur (8) couplé à la roue à aubes (17) pour, dans le premier état, alimenter la roue à aubes (17) et pour, dans le second état, être entraîné par la roue à aubes (17), dans lequel
du côté de l'entrée d'air (2) de la roue à aubes (17), à proximité de la roue à aubes (17), des premières aubes directrices réglables (9) sont disposées, de préférence adjacentes à la roue à aubes (17), dans lequel
du côté de la sortie d'air (3) de la roue à aubes (17), à proximité de la roue à aubes (17), des secondes aubes directrices réglables (10) sont disposées, de préférence adjacentes à la roue à aubes (17).

2. Véhicule (1) selon la revendication 1, dans lequel chacune des premières aubes directrices réglables (9) est inclinable autour d'un axe d'inclinaison s'étendant radialement à partir de l'axe.

3. Véhicule (1) selon l'une quelconque des revendications précédentes, dans lequel
une première bague de réglage (11) est disposée autour des premières aubes directrices réglables (9), dans lequel
la première bague de réglage (11) peut tourner autour de l'axe et vient en prise par l'intermédiaire d'un mécanisme avec les premières aubes directrices (9), afin que lors de la rotation de la première bague de réglage (11), les premières aubes directrices (9) soient réglées.

4. Véhicule (1) selon l'une quelconque des revendications précédentes, dans lequel
la roue à aubes (17) comprend des aubes de roue à aubes (7), et
les premières aubes directrices (9) forment un angle avec les aubes de roue à aubes (7) inférieur à 40 degrés, en vue radiale, dans le premier état du dispositif turbo (5), et dans lequel
les premières aubes directrices (9) forment un angle avec les aubes de roue à aubes (7) compris entre 45 degrés et 90 degrés, de préférence entre 70 et 90 degrés, en vue radiale, dans le second état du dispositif turbo (5).

5. Système turbo destiné à être utilisé dans un véhicule (1) possédant une carrosserie, dans lequel
le véhicule (1) comprend une entrée d'air (2) disposée à l'avant de la carrosserie, une sortie d'air (3) disposée à l'arrière de la carrosserie et un conduit (4) reliant l'entrée d'air (2) à la sortie d'air (3), dans lequel le système turbo comprend
un dispositif turbo (5) conçu pour être disposé dans le conduit (4) et pour, lorsqu'il est disposé dans le conduit (4), pomper de l'air de l'entrée d'air (2) à travers le conduit (4) vers la sortie d'air (3) dans un premier état et permettre l'entraînement du dispositif turbo (5) par de l'air s'écoulant via l'entrée d'air (2) à travers le conduit (4) vers la sortie d'air (3) dans un second état, dans lequel le dispositif turbo (5) comprend
- une roue à aubes (17) disposée sur un axe, et
- un moteur-générateur (8) couplé à la roue à aubes (17) pour, dans le premier état, alimenter la roue à aubes (17) et pour, dans le second état, être entraîné par la roue à aubes (17), et dans lequel le système turbo comprend en outre
- du côté de la roue à aubes (17) des premières aubes directrices réglables (9) disposées à proximité de la roue à aubes (17), de préférence adjacentes à la roue à aubes (17), et d'un autre côté de la roue à aubes (17) des secondes aubes directrices réglables (10) disposées à proximité de la roue à aubes (17), de préférence adjacentes à la roue à aubes (17).

6. Procédé mis en œuvre par ordinateur pour commander le dispositif turbo (5) dans le véhicule (1) mentionné dans la revendication 1, le procédé mis en œuvre par ordinateur comprenant
- la réception d'un signal indicatif d'une vitesse du véhicule (1) et/ou indicatif d'une vitesse du vent et/ou indicatif d'une orientation du véhicule (1) par rapport à une direction du vent, et
- sur la base de la vitesse et/ou de la vitesse du vent et/ou de l'orientation du véhicule (1) par rapport à la direction du vent, respectivement, telles qu'indiquées par le signal, la détermination du premier état ou du second état pour le dispositif turbo (5), et
- le fait d'amener le dispositif turbo (5) à adopter le premier état ou le second état déterminé.

7. Procédé mis en œuvre par ordinateur selon la revendication 6, dans lequel le fait d'amener le dispositif turbo (5) à adopter le premier état ou le second état déterminé comprend le fait d'amener le moteur-générateur (8) à alimenter la roue à aubes (17) ou, respectivement, à être entraîné par la roue à aubes (17).

8. Procédé mis en œuvre par ordinateur selon l'une des revendications 6 ou 7, dans lequel la détermination du premier état ou du second état pour le dispositif turbo (5) comprend
- la réalisation d'une comparaison de la vitesse telle qu'indiquée par le signal avec une vitesse seuil, et
- sur la base de la comparaison, la détermination du premier état ou du second état pour le dispositif turbo (5).

9. Procédé mis en œuvre par ordinateur selon la revendication 8, dans lequel la détermination du premier état ou du second état pour le dispositif turbo (5) comprend
- la détermination du fait que la vitesse telle qu'indiquée par le signal est inférieure à la vitesse seuil et, sur la base de cette détermination, la détermination du premier état pour le dispositif turbo (5), ou
- la détermination du fait que la vitesse telle qu'indiquée par le signal est supérieure à la vitesse seuil et, sur la base de cette détermination, la détermination du second état pour le dispositif turbo (5).

10. Procédé mis en œuvre par ordinateur selon l'une quelconque des revendications 6 à 9, comprenant en outre
- sur la base de la vitesse et/ou de la vitesse du vent et/ou de l'orientation du véhicule (1) par rapport à la direction du vent, respectivement, telles qu'indiquées par le signal, la détermination de positions et/ou d'orientations respectives des premières aubes directrices (9), et
- le fait d'amener les premières aubes directrices (9) à adopter les positions et/ou orientations déterminées.

11. Dispositif de commande pour commander le dispositif turbo (5) mentionné dans la revendication 1, le dispositif de commande comprenant un processeur conçu pour réaliser le procédé selon l'une quelconque des revendications 6 à 10.

12. Programme informatique comprenant des instructions qui, lorsque le programme est exécuté par le dispositif de commande selon la revendication 11, amènent le dispositif de commande à mettre en œuvre le procédé selon l'une quelconque des revendications précédentes 6 à 10.

13. Support de données lisible par ordinateur sur lequel est stocké le programme informatique de la revendication 12 précédente.
